# EUROPEAN PATENT APPLICATION

(11) **EP 4 506 850 A1**
(43) Date of publication of application: **12.02.2025**
(21) Application number: 23190830.2
(22) Date of filing: 10.08.2023
(51) Int. Cl.: G06F 40/274, G06F 40/166, G06F 40/174, G06F 40/186, G06N 20/00, G06F 3/048

(54) **ARTIFICIAL INTELLIGENCE ASSISTED TEXT PROCESSING**

(71) Applicant: Best, Bastian, 81829 München (DE)
(72) Inventor: Best, Bastian, 81829 München (DE)
(74) Representative: Best, Bastian

(57) **Abstract**

Disclosed is a method of artificial intelligence, Al, assisted natural-language text processing. The method comprises entering (402) user-generated text input into an electronic document during a user-writing activity while the electronic document is displayed on a graphical user interface, the user-generated text input comprising natural-language text and at least one placeholder. The method comprises determining (404) that the user-writing activity is completed. The method comprises starting (406) a machine-writing activity comprising entering (408) machine-generated text input from an Al system (104) comprising one or more language models (106) into the electronic document replacing the at least one placeholder (one after the other) in the electronic document with natural-language text.

## Description

### TECHNICAL FIELD

The present disclosure generally relates to electronic document processing, and more specifically to techniques for exploiting the capabilities of artificial intelligence and natural language processing to greatly streamline the document processing workflow.

### BACKGROUND

Artificial intelligence, and particularly the recent advancements in large language models, have sparked a remarkable revolution in text understanding and production. Advanced models like GPT-4 have demonstrated unprecedented capabilities in understanding and generating human-like text.

Language model-based graphical user interfaces are typically chat-based. For exampoe, ChatGPT developed by OpenAI offers users a versatile conversational interface in which users interact with the model through a chat window, entering text queries or prompts and receiving text-based responses.

Similarly, Microsoft Copilot has recently announced plans to integrate advanced language model capabilities into their office suite. However, even in applications like Copilot, the interaction paradigm remains largely confined to a chat window. Notably, while Copilot assists users in editing documents, such as those in Microsoft Word, the user-AI interaction typically remains embedded within a chat box adjacent to the document itself.

While these language model user interfaces, exemplified by ChatGPT and Copilot, exhibit remarkable utility, their current interaction design has severe limitations, particularly when applied to document processing tasks. The current approach of containing interactions within a chat box hinders seamless integration and inhibits the realization of the full potential of these models in document-related workflows. Users are required to oscillate between the document and the chat box, disrupting the natural flow of work. This sub-optimal interaction model introduces inefficiencies, cognitive load, and contextual disconnection that can impede the user's ability to efficiently leverage the language model's capabilities.

In view of the above, it is an objective of the present disclosure to provide a more efficient user interface for language model-based applications, particularly in the context of document processing, that overcomes the above-mentioned disadvantages of the prior art. This new interface should minimize cognitive load, reduce context-switching overhead, and offer a cohesive environment that allows users to leverage the Al's capabilities without compromising their workflow. By addressing this challenge, we can unlock the full potential of language model-based applications for document-related tasks, significantly enhancing productivity and user satisfaction.

### SUMMARY OF THE DISCLOSURE

One aspect of the present disclosure relates to a method of artificial intelligence (AI) assisted natural-language text processing. The method may be computer-implemented. The method may comprise entering user-generated text input into an electronic document. The entering may occur during a user-writing activity. The entering may occur while the electronic document is displayed on a graphical user interface. The user-generated text input may comprise natural-language text, at least one placeholder, or both. The method may comprise determining that the user-writing activity is completed. The method may comprise starting a machine-writing activity, preferably in response to the determining that the user-writing activity is completed. The method may comprise entering, preferably automatically, such as without requiring user interaction, machine-generated text input into the electronic document. The machine-generated text input may be from an AI system comprising one or more language models. The machine-generated text input may replace the at least one placeholder in the electronic document, possibly one after the other if multiple placeholders are present. The machine-generated text input may replace the at least one placeholder in the electronic document with natural-language text.

Accordingly, this aspect provides a user-centric interface that employs placeholders directly in the electronic document, where the AI system will generate its outputs. This offers several distinct advantages over the conventional chat box-based interfaces. For example, it enhances the user experience, accelerates workflow efficiency, and creates a more seamless integration of AI assistance into document processing tasks. Overall, the method according to the above-described aspect assists the user in entering text in a computer system and enables an improved human-machine interaction.

Additional advantages include:
- Contextual Continuity: By embedding AI-generated text directly within the document using placeholders, the user can maintain a continuous context without needing to switch between a separate chat window and the document. This reduces cognitive load, minimizes interruptions, and enhances the user's ability to focus on content creation or editing.
- Real-time Visual Feedback: With text generated at placeholders, users receive immediate visual feedback as the AI is typing. This live feedback aids users in understanding how the AI acting, fostering an interactive and iterative content creation process.
- Enhanced Collaboration: Placeholder-based AI-generated text fosters more effective collaboration between humans and machines. The user can work on a document while benefiting from the Al's suggestions directly integrated into the content, fostering a seamless environment.
- Improved Cognitive Flow: The integration of AI-generated text within the document eliminates the need for users to context-switch between the document and the chat box. This fluid interaction model promotes a smoother cognitive flow, enabling users to concentrate on the document itself rather than navigating different interface elements.
- Reduced Ambiguity: AI-generated text placed directly in the context of the document can often be clearer and more relevant, as the AI understands the context and can tailor its suggestions accordingly. This reduces potential misinterpretations that might arise when using a separate chat box.
- Efficiency in Revisions: When content needs revisions, having AI-generated text directly in placeholders simplifies the editing process. Users can modify the text in context and receive instant feedback from the AI, streamlining the iteration and refinement of content.
- Ease of Formatting: Placeholder-based AI suggestions can include formatting cues, making it easier for users to visualize how their content will appear in its final form. This feature is particularly advantageous when dealing with complex documents that require precise formatting.
- Seamless Learning Curve: Users familiar with conventional document editing interfaces will find the transition to a placeholder-based AI assistance approach relatively intuitive. The Al's suggestions naturally integrate into the user's existing workflow, minimizing the learning curve.
- Increased User Confidence: Users often feel more confident in adopting AI assistance when they can see the AI's suggestions directly integrated into their work. Placeholder-based AI outputs enhance user trust in the suggestions provided by the AI, as they are seamlessly woven into the user's content.

In summary, the use of placeholders to directly integrate AI-generated text within the document offers a transformative shift in how users interact with language model-based applications. This approach optimizes the user experience, enhances collaboration, and streamlines document processing tasks, ultimately leading to higher efficiency, improved content quality, and greater user satisfaction.

According to another aspect of the of the present disclosure, at least one placeholder is determined by a position of a user-controlled text cursor in the electronic document when it is determined that the user-writing activity is completed. A text cursor, also known as a caret or insertion point, is a visual indicator in a graphical user interface (GUI) that shows the current position where new text will be inserted or where editing actions will take place within a text document or input field. The text cursor typically appears as a vertical line or a blinking rectangle that indicates the specific location within the text where characters will be added or modified.

Accordingly, the AI system will insert the machine-generated text exactly at the position indicated by the user. This position is indicated implicitly in this case, namely by way of the cursor position. Instructing the AI system where to insert the machine-generated text based on the position of the user-controlled text cursor offers several advantages that streamline interaction, improve user control, and/or enhance the overall efficiency of the text-generation process, e.g.:
- Natural Interaction: Users are already accustomed to positioning the text cursor in a document to indicate where new text should be inserted. Leveraging this familiar action for AI-generated content makes the interaction feel intuitive and aligns with users' established behaviors.
- Seamless Integration: By utilizing the existing text cursor, there is no need to introduce new interaction patterns or additional user interface elements. This approach seamlessly integrates AI-generated content into the user's existing workflow, in particular into the electronic document that is being process.
- Real-time Feedback: As users move the cursor, they receive instant feedback on where the AI-generated content will be inserted. This real-time connection between cursor position and content insertion enhances user confidence and control.
- Precise Content Placement: Users can position the cursor with precision, indicating exactly where they want AI-generated content to appear. This level of specificity ensures that the AI's contributions align with the user's intended context.
- User-Centric Customization: Users have the autonomy to choose where they want AI-generated content, tailoring the AI's assistance to their specific needs and the document's structure.
- Dynamic Contextual Adaptation: As users navigate the document and position the cursor, the AI can adapt its suggestions based on the surrounding text. This contextual awareness enhances the relevance and coherence of AI-generated content.
- Reduced Cognitive Load: Utilizing the text cursor for content insertion eliminates the need for users to learn and manage additional AI-specific commands or interactions, reducing cognitive load and simplifying the process.
- Smoother Content Review: Users can review and edit AI-generated content in context, without the need to navigate away to a separate preview or editing mode, or the chat box known in the prior art. This facilitates faster content refinement.
- Platform Independence: The approach of using the cursor for instruction is platform-independent, applicable to various devices and applications that support text editing. This universality ensures a consistent experience across different environments.
- User Empowerment: Generally speaking, allowing users to control where AI-generated content appears fosters a sense of empowerment and ownership over the final output. Users can seamlessly blend their own ideas with AI assistance.

In summary, instructing an AI system where to insert text using the position of the user-controlled text cursor aligns with natural behaviors, provides real-time feedback, and empowers users to seamlessly integrate AI-generated content into their existing workflow. This approach optimizes user control, collaboration, and efficiency in content creation and editing tasks.

According to another aspect of the of the present disclosure, the position the AI system will insert the machine-generated content may be indicated explicitly in the electronic document itself, in that at least one placeholder is a placeholder entered by the user into the electronic document. Accordingly, the user can write text with placeholders sprinkled in directly in the document and then the AI system will replace those placeholders with meaningful content. This offers several advantages that further streamline content creation, improve human-machine collaboration, and enhance overall document quality, e.g.:
- Structured Content Generation: Using placeholders entered in the document enforces a structured approach to content creation. Authors can outline the document's structure, defining where different types of content should appear, ensuring a coherent and organized narrative.
- Efficient Drafting: Placeholder-based writing enables authors to focus on capturing ideas and structure without being overly concerned about generating polished content. This promotes faster initial drafting and brainstorming.
- Workflow Flexibility: Authors can start with an outline featuring placeholders and refine the content progressively. This flexibility allows content creation to be an iterative process, accommodating evolving ideas and adjustments.
- AI-Enhanced Creativity: AI-generated content that replaces placeholders complements the author's creativity by providing suggestions, examples, or data that the author might not have thought of. This synergy enhances the document's depth and quality.
- Efficient Revisions: Placeholder-based writing simplifies the revision process. Authors can identify gaps or areas requiring improvement more easily, and AI-generated suggestions can help fill these gaps seamlessly.
- Consistent Tone and Style: AI-generated content can maintain a consistent tone and style throughout the document, ensuring uniformity even when multiple authors are involved.
- Content Consistency: For documents requiring consistent information insertion (e.g., reports, templates), using placeholders ensures that specific content is always in the right place and/or adheres to predefined formats.
- Enhanced Information Flow: Authors can focus on content structure and ideas, leaving details to be filled in later, such as by the AI system. This enhances the information flow and narrative coherence, resulting in a more engaging document.
- Time Savings: AI-generated content minimizes the need for research during the initial drafting phase. This saves time and/or allows authors to concentrate on conceptualizing the content.
- Improved User Experience: The final document benefits from both the author's creative input and the AI's complementary suggestions, providing readers with a richer and more informative experience.

In summary, writing a text with placeholders directly in the document and then leveraging the AI system to replace those placeholders enhances content creation by fostering structured writing, enabling collaboration, and improving overall document quality. This approach capitalizes on the strengths of both human creativity and AI assistance to produce comprehensive and compelling documents.

Various ways of entering a placeholder into the electronic document may be supported. Generally speaking, a placeholder may comprise one or more characters or symbols. The one or more characters may be selected to be easily recognizable and distinct from regular text.

The at least one placeholder entered by the user may comprise a (i.e., one) placeholder character, such as a hash character ("#") or a forward slash character ("/") or an "at"-character ("@") or an underscore character ("_"). This way, the user can very efficiently insert placeholders into the text while typing, namely by simply interjecting the written text with placeholder characters as appropriate.

The at least one placeholder entered by the user may comprise a placeholder character users. Other examples include two or more underscores (e.g., three underscores: "_"). The character sequence may also comprise a predefined word, such as "PLACEHOLDER".

The at least one placeholder entered by the user may comprise a placeholder pair. The placeholder pair may comprise a leading placeholder character or character sequence, such as "(", "#", "..." or "/". The placeholder pair may comprise a trailing placeholder character or character sequence, such as ")", "#", "..." or "/". This way, the user can precisely demarcate parts of the entered text that should be replaced by the AI system and parts that should remain unchanged. Further examples include double angle brackets ("« »") or double curly braces ("{{ }}").

According to another aspect of the of the present disclosure, the placeholder character(s) or character sequence(s) can be pre-defined and/or user-adjusted.

According to another aspect of the of the present disclosure, the at least one placeholder comprises a prompting input by the user. The machine-generated text input may be generated by the AI system based at least on the prompting input.

As one example, the prompting input may comprise an incomplete sentence that the user wants the AI system to complete. As another example, the prompting input may comprise a briefly formulated outline of what the user wants the AI system to formulate. Generally speaking, a prompting input may comprise any information a user might want to convey to the AI system to cause the AI system to produce a desired output.

According to another aspect of the of the present disclosure, the at least one placeholder comprises a leading placeholder character or placeholder character sequence followed by the prompting input and, optionally, followed by a trailing placeholder character or placeholder character sequence. This way, the prompt provided by the user can be clearly demarcated from other text in the document.

According to another aspect of the of the present disclosure, the step of determining that the user-writing activity is completed can be achieved in a variety of ways, comprising one or more of the following:
The step of determining that the user-writing activity is completed may comprise determining that the user has provided a function key user input. The function key may comprise a distinct kay reserved for interaction with the AI system, or a function keys often labeled as "F1" through "F12". Triggering the AI system to replace placeholders with AI-generated content using a function key puts the user in control. Users can decide precisely when they want to incorporate AI-generated content. Users can seamlessly alternate between writing, reviewing, and AI-generated content insertion using the function key input. This streamlines the overall workflow and eliminates interruptions. Manual triggering of the placeholder replacement through the activation of a function key prevents the AI system from unexpectedly interrupting the writing process. This reduction in cognitive load maintains focus and control.

The step of determining that the user-writing activity is completed may comprise determining that the user has stopped the text input for a predetermined threshold time. Triggering the AI system to replace placeholders when the user has paused their text input for a predetermined has various advantages:
- Intuitive Timing: The AI-generated content insertion occurs naturally when the user pauses, aligning with the user's thought process and creating a smooth transition between manual input and AI assistance.
- Seamless Integration: Placeholder replacement is proactive and automated, seamlessly integrating AI-generated content without requiring the user to take specific actions.
- Enhanced Focus: Users can concentrate on expressing ideas and structuring content without needing to interrupt their flow to manually trigger AI assistance.
- Reduced Interaction Overhead: The AI system anticipates when assistance is needed, minimizing the need for explicit user instructions and reducing the cognitive load of managing AI interactions.
- Efficiency in Content Enhancement: Placeholder replacement during pauses allows users to quickly access AI-generated suggestions without interrupting their content creation rhythm.
- Enhanced Productivity: The AI system adds value during periods of pause, maximizing the user's productivity by providing suggestions when the user is likely to consider them.
- Immediate Feedback: Placeholder replacement provides immediate feedback, allowing users to review AI-generated suggestions right after pausing, enhancing user decision-making.
- Contextual Relevance: AI-generated suggestions and/or insertions can consider the content context up to the pause point, ensuring that the inserted content is relevant to the document's flow.
- Balanced User-AI Interaction: The AI system respects the user's writing pace and offers support when the user momentarily pauses, fostering a balanced and user-centric interaction.
- Predictable Interaction: Users become accustomed to AI-generated content appearing after a pause, creating a predictable rhythm and fostering a sense of familiarity with AI integration.
- Customizable Threshold: If the threshold time is adjustable, it allows users to adjust the AI's responsiveness based on their writing style and the nature of the document.
- Learning Opportunity: Users can learn from the AI's suggestions and observe how their placeholders are transformed into meaningful content, enhancing their understanding of AI capabilities.

In summary, triggering the AI system to replace placeholders during user pauses leverages natural writing rhythms to seamlessly integrate AI-generated content. This approach enhances content creation, reduces interruption, and fosters a harmonious and proactive collaboration between users and AI assistance.

The step of determining that the user-writing activity is completed may comprise determining that the user has stopped the text input for a predetermined threshold time (directly) after entering a placeholder. This way, the placeholder replacing may only occur when the user pauses directly after entering the placeholder, indicating to the AI system that now is a good time to replace the placeholder(s).

The step of determining that the user-writing activity is completed may comprise determining that the user has stopped the text input for a predetermined threshold time after ending a current sentence, in particular by providing a punctuation mark input, in particular a sentence-ending punctuation mark, such as a period, a question mark or an exclamation point, or a comma, a colon or a semicolon. The punctuation mark may possibly be followed by one or more spaces. This way, the AI completion may particularly seamlessly integrate into the user's writing flow, namely in-between sentences.

The step of determining that the user-writing activity is completed may comprise determining that the user has stopped the text input for a predetermined threshold time after ending a current paragraph, section, or other structural portion of the document, in particular by providing a return key input. This way, the AI completion may particularly seamlessly integrate into the user's writing flow, namely in-between paragraphs, sections, or the like.

The step of determining that the user-writing activity is completed may comprise determining that the user has stopped touching a text input device, such as a (physical, virtual or projected) computer keyboard. In other words, the AI-based placeholder replacement may happen when the user raises the hands from the keyboard which creates a particularly seamless and also ergonomic workflow. For example, the user may move into a more relaxing posture or so a stretching exercise while the AI replaces the placeholder(s).

To this end, a computer device performing the method may comprise sensor means configured to determine that the user has stopped touching the text input device. For example, the keyboard may use capacitive sensors to detect touch. These sensors may detect changes in capacitance caused by a user's finger touching or leaving the key surface. As another example, Proximity sensors, optical sensors and/or infrared sensors may be placed near the keyboard or keyboard area to detect the presence of the user's hand(s). When the sensors no longer detect their hands in proximity, it suggests the user has stopped touching the keyboard. In another example, if the system detects mouse or touchpad interaction, it might infer that the user has moved their hands away from the keyboard. In yet another example, a built-in wrist rest of the computer device may comprise sensors to detect the presence of the user's wrists. When the wrists are no longer detected, it indicates that the user has stopped touching the keyboard. As another example, a wearable device such as a smartwatch or fitness tracker worn on the wrist of the user my provide data indicating whether the user's hands are in close proximity to the keyboard.

The value of the threshold time for triggering the AI system to replace placeholders during user pauses may depend on various factors, including the user's writing speed, the complexity of the content, and/or the desired balance between manual input and AI-generated assistance. The AI system may be adapted to automatically adjust the threshold time based on one or more of these factors. In one practical implementation, a pre-defined (e.g., default) value for the threshold time may be set to a value greater or equal to 0.5 seconds, preferably to approximately 1 second. In certain scenarios, the threshold time may also be 0 seconds.

According to another aspect of the of the present disclosure, the machine-generated text input is visually distinguished from the user-generated text input, such as in a different color, at least during the machine-writing activity. Distinguishing machine-generated text input by the AI from user-generated text input, especially through visual cues like a different color, offers several advantages that enhance readability, transparency, and the overall user experience, e.g.:
- Transparency and Attribution: Visual differentiation provides clear attribution, indicating which portions of the content were contributed by the AI. This transparency fosters trust and accountability, helping readers understand the sources of information.
- Quality Assessment: Users can easily identify AI-generated content and review its relevance, coherence, and accuracy. This allows them to assess the quality of the AI's contributions before accepting them.
- Editing and Review: Distinguishing AI-generated text allows users to focus on editing and reviewing those portions more attentively, ensuring they align with the intended message and style.
- Content Integration Control: Users can decide which AI-generated suggestions to incorporate into their content with greater confidence, as they can clearly see which parts are suggestions.
- Human-Machine Collaboration: Clear differentiation fosters a sense of collaboration between the user and the AI. Users can make informed decisions about where AI assistance enhances their writing.
- Learning Opportunity: By observing the differences between their writing and AI-generated text, users can learn from the AI's suggestions and improve their own writing skills.
- Distinctive Reading Experience: Readers can quickly identify and understand the AI's role in the content creation process, providing a unique reading experience.
- Message Control: Authors can ensure that the AI-generated content aligns with their intended message, tone, and/or voice, avoiding any potential conflicts or unintended messaging.
- Visual Clarity: Differentiating AI-generated text through color or other visual cues avoids confusion and clearly communicates the dual authorship of the content.
- Content Fusion: Distinguished AI-generated text can be easily merged or separated from user-generated content, facilitating content fusion or separation when necessary.
- Highlighting Innovation: By visually marking AI-generated content, the user may highlight the innovative blend of human creativity and AI assistance, showcasing the user's commitment to advanced technology.

In summary, visually distinguishing machine-generated text input by the AI from user-generated text input serves to enhance transparency, user control, and collaboration while promoting informed decision-making and content quality assessment.

According to another aspect of the of the present disclosure, an inactive state of a user-controlled text cursor is visually indicated during the machine-writing activity. This may comprise changing a visual appearance of the user-controlled cursor, in particular a color. This may also comprise removing the user-controlled text cursor from the graphical user interface. By visually indicating when the user-controlled text cursor is inactive, users can readily discern whether they or the AI are currently contributing to the content, ensuring transparency and clarity in the collaborative writing process. Indicating the inactive state of a user-controlled text cursor during machine-writing activity through visual cues like changing its appearance or temporarily removing it also offers advantages by clearly distinguishing between user and AI contributions, avoiding confusion, enabling focused review and editing of AI-generated content, and enhancing content comprehension, accuracy, and user control, all of which contribute to a streamlined, efficient, and user-friendly interaction between the user and the AI-generated content.

The user-controlled text cursor may be set to reappear at the same position once the machine-writing activity is completed. This feature ensures that users seamlessly regain control and can immediately continue manual input without disruption.

During the machine-writing activity, a distinct machine-controlled text cursor can appear. This visual cue signals that the AI is generating content and provides a clear separation between user input and AI suggestions.

To guide users through the content transformation process, the cursor can visually appear to move from the user's position to the placeholder where AI-generated content will be inserted. This dynamic visual shift aids users in understanding the AI's role in content enhancement. Moving the cursor will create a physiological reaction in many users following the cursor with their eyes, thereby enhancing the understandability of the human-machine interaction.

According to another aspect of the of the present disclosure,

According to another aspect of the of the present disclosure, the method further comprises completing the machine-writing activity after entering the machine-generated text input into the electronic document and after waiting for a predetermined time, also referred to as a buffer time. Completing the machine-writing activity after entering the machine-generated text input into the electronic document and waiting for a predetermined buffer time offers distinct advantages. This approach allows users to review the AI-generated content before finalizing its integration, ensuring coherence and accuracy. The buffer time encourages a thoughtful pause, enabling users to assess the content's alignment with their writing objectives and make any necessary adjustments. This deliberate review contributes to content quality, enhances user satisfaction, and maintains a smooth writing workflow by ensuring that AI-generated contributions seamlessly blend with the user's intent.

After expiry of the buffer time, and thus completion of the machine-writing activity, the machine-generated text may become final in the document, e.g., by changing color or other formatting to the same color or formatting as the user-generated content.

According to another aspect of the of the present disclosure, the method comprises receiving an intercepting user input during the machine-writing activity. The method may comprise stopping entering the machine-generated text input into the electronic document in response to the intercepting user input. Receiving intercepting user input during the machine-writing activity and halting the entry of machine-generated text input into the electronic document in response is advantageous in various ways, e.g.:
- Real-Time Control: Users gain immediate control over AI-generated contributions, enabling them to review, modify, or discard suggestions in real-time, enhancing content accuracy and quality.
- Adaptability: Intercepting user input allows users to adapt to unexpected changes or refine their content strategy as new ideas emerge, promoting dynamic and responsive content creation.
- Technical Accuracy: Users can intervene to ensure technical precision and correctness in AI-generated content, minimizing inaccuracies or misinterpretations.
- Content Customization: Intercepting input ensures that AI-generated text aligns with users' unique style, tone, and messaging preferences, fostering personalized and tailored content.
- Content Integration Mastery: Users can seamlessly blend AI suggestions with their own writing, maintaining control over the final product's flow and structure.
- Enhanced Creativity: The ability to interrupt and revise AI input encourages creative exploration, as users can experiment with different ideas and directions in real-time.
- Error Prevention: Users can catch and rectify any AI-generated errors or misinterpretations before they become part of the final content, promoting high-quality output.
- Technical Refinement: Users proficient in a particular domain can ensure the accuracy of specialized terminology or technical details, contributing to the document's technical depth.
- Algorithmic Learning: The AI system can learn from user interventions, improving its future suggestions by understanding user preferences and refining its predictive abilities.
- Responsive Collaboration: Real-time intervention fosters an active collaboration between user and AI, optimizing content integration and ensuring a harmonious partnership.
- Efficient Iteration: Users can iteratively refine AI input, achieving content perfection efficiently through an iterative process of generation and intervention.
- Technical Empowerment: Users gain a sense of technical empowerment by being able to fine-tune AI-generated content, leveraging their expertise to enhance the document's quality.
- Seamless Workflow: Intercepting input seamlessly integrates user decisions into the workflow, ensuring that manual and AI contributions blend cohesively.
- Quality Assurance: Users can act as quality assurance gatekeepers, preventing the inclusion of AI-generated content that doesn't meet their standards.
- Customizable Experience: The feature offers a customizable experience where users can choose the extent of AI intervention based on their writing objectives.

In summary, receiving intercepting user input during the machine-writing activity and responding by halting AI-generated text entry empowers users with real-time control, technical accuracy, content customization, and creative exploration, while fostering a responsive collaboration that optimizes content quality and maintains a user-centric approach to writing.

According to another aspect of the of the present disclosure, the intercepting user input comprises intercepting text or speech input. The method may further comprise displaying the intercepting text or speech input, i.e., a textual version thereof, on the graphical user interface without editing the electronic document. Accordingly, the user may intercept the machine-writing activity by inputting user-generated text, e.g., by typing on the keyboard, although the AI system is currently writing into the electronic document. However, this intercepting text or speech input will not be inserted into the electronic document. Instead, it may be displayed in a user interface portion separate from the electronic document, such as in the vicinity of a current machine-writing position. The method may comprise providing the intercepting text or speech input as a prompt to the AI system to generate a reply. The method may comprise (automatically) revising the electronic document based on the reply. This way, the user can quickly, seamlessly and effortlessly change the machine-generated content without having to switch back and forth between the electronic document and a static or permanent chat box, as known from the prior art.

According to another aspect of the of the present disclosure, the intercepting user input comprises a revocation request input, such as a function key input, in particular an escape key input. The method may further comprise revoking the machine-writing activity in response to the revocation request input. This way, the user can quickly undo a machine-generated content production.

According to another aspect of the of the present disclosure, the machine-generated text input is generated by the AI system based at least on content of the electronic document. Generating machine-generated text input by the AI system based on the content of the electronic document offers the advantage of contextual relevance, ensuring that the AI's suggestions are closely aligned with the existing subject matter and themes present in the document. This contextual awareness enhances the coherence of the document, providing users with AI-generated content that seamlessly integrates into the existing narrative and contributes meaningfully to the document's overall flow and purpose.

According to another aspect of the of the present disclosure, the machine-generated text input is generated by the AI system based at least on context information available to the AI system. Generating machine-generated text input by the AI system based on available contextual information, including other documents accessible to the AI, offers advantages of tailored content precision, timely suggestions, data integration for relevance, consistency maintenance, nuanced understanding of language, personalization, adaptive learning for improved future suggestions, efficient research assistance, scenario-specific details, and targeted marketing content. This approach ensures that AI-generated content aligns with the document's specific context, user preferences, objectives, and broader knowledge base, enhancing the overall quality and relevance of the generated suggestions. For example, when drafting a patent application, the AI system may draw from the invention description to accurately replace the placeholder(s).

According to another aspect of the of the present disclosure, the electronic document comprises a digitally stored and/or manipulable representation of information. The document may comprise various types of content, such as text, images, graphics, audio, video, and interactive elements. The electronic document may comprise a broad range of file formats and/or structures, including but not limited to text documents, spreadsheets, presentations, PDFs, multimedia presentations, e-books, and interactive web-based content.

According to another aspect of the of the present disclosure, the electronic document may be print-formatted and/or printable, meaning the electronic document can be formatted for print or printing purposes, allowing it to be visually structured and/or organized for optimal readability when reproduced on paper or other physical media. This feature ensures that the document's layout, fonts, images, and/or other elements are optimized for print output.

According to another aspect of the of the present disclosure, the electronic document does not primarily comprise programming code and/or scripts. Instead, it may primarily or entirely comprise human-readable content. The document may be intended for consumption, communication, and/or presentation rather than for automated computational processes.

The electronic document may be a word processor document. Such an electronic document may be created, edited, and/or formatted using word processing software, such as Microsoft Word. This software enables users to input and/or manipulate text, apply formatting styles, insert images and/or other visual elements, and/or organize content in a structured manner. This feature emphasizes the document's compatibility with widely used word processing applications, facilitating content creation, and editing by users.

The term natural-language text should be understood as content, in particular written or typed content, that is composed using human language, often characterized by its linguistic structure, grammar, vocabulary, and/or syntax. Natural-language text is the form of communication that humans use to convey information, express ideas, and/or interact with one another. Unlike programming languages or structured data formats, natural-language text adheres to the conventions of a specific human language, enabling communication, expression, and/or interpretation without the need for specialized technical knowledge or computational processing.

Throughout the present disclosure, any user-generated text input may be received through various input methods that facilitate the entry of human language into a digital system. Common approaches include keyboard input, voice recognition, and/or handwriting recognition. With keyboard input, users type text using a physical or virtual keyboard, translating their keystrokes into digital characters. Voice recognition involves using a microphone to convert spoken words into text, utilizing algorithms to interpret and transcribe spoken language. Handwriting recognition, typically used with touchscreens or stylus devices, converts handwritten text into digital format. These methods allow users to seamlessly input their thoughts, ideas, or commands into a computer, enabling a wide range of interactions, from writing documents to issuing commands to applications, such as the AI system 104.

It should be understood that the various aspects of the present disclosure that have been described above, as well as those that will be described in the following, can be freely combined.

In one practical example, the electronic document is a patent application. One practical application of the novel concepts disclosed herein is patent drafting, as one of many examples. Despite the advancements of digitalization in modern life and business, patent drafting has remained a substantially manual and oftentimes highly ad-hoc and individualized endeavor. Many patent attorneys still tend to perceive patent drafting mainly as an art form rather than embracing its potential as an engineering activity. Yet, in recent years, some software products have been introduced with a view to automate certain aspects of the patent drafting process. While using such software solutions certainly leads to superior results as in a purely manual process, there is still tremendous room for improvement.

At the same time, artificial intelligence, and particularly the recent advancements in large language models, have sparked a remarkable revolution in text understanding and production. Advanced models like GPT-4 have demonstrated unprecedented capabilities in understanding and generating human-like text, which would make such models a perfect companion for patent attorneys during the patent drafting process and related activities. However, a significant obstacle for the adoption of artificial intelligence, particularly large language models, in the patent drafting process lies in the special security requirements involved when handling confidential, proprietary or otherwise sensitive information. Obviously, inputting details about an invention into a chatbot running on the Internet, such as ChatGPT by OpenAI, might well have catastrophic consequences for a later filed patent. Some existing solutions address this dilemma by allowing the use of artificial intelligence and large language models only when dealing with published patent information which, however, falls short of the true potential of these technologies.

In view of the above, it is an objective of the present disclosure to provide a software product that overcomes the above-mentioned disadvantages of the prior art.

Certain aspects of the present disclosure provide novel software that sets out to revolutionize the process of obtaining intellectual property (IP) rights by empowering users to combine the strengths of both human intellect and artificial intelligence (AI), in particular by capitalizing on recent advancements in large language models (LLMs), while meeting the exceptionally high confidentiality standards involved in the handling of IP rights.

One aspect of the present disclosure relates to a software product. The software product may comprise one or more function modules. Each function module may be configured to facilitate one or more specific tasks in the course of creating, producing, obtaining, analyzing, enforcing and/or otherwise handling IP rights, including one or more related documents. Accordingly, the provided software product may be thought of as an integrated development environment (IDE) for IP rights. IDEs are typically software applications that provide comprehensive facilities for software development, and the present disclosure transfers this concept into the domain of IP rights and the related documents.

At least one (i.e., some) of the function modules may be configured to access an AI system, in particular a natural language processing (NLP) system. The NLP system may be configured to support natural-language understanding (NLU) and/or natural-language generation (NLG). The NLP system may comprise one or more language models, in particular one or more LLMs. In the following, the terms "language model" or "LLM" will be used in singular form for simplicity, but this should be understood to also cover multiple models if technically feasible.

Before various advantageous function modules will be described in greater detail, techniques to implement stringent security measures to prevent unauthorized access to confidential information are presented, thereby for the first time enabling a widespread adoption of NLP systems, particularly LLMs, in the field of IP rights:
According to one security-related aspect of the present disclosure, the software product is configured to be used by patent attorneys while complying with their special professional duties. In a preferred implementation of the software product, this includes at least full compliance with the German Law on Patent Attorneys (Patentanwaltsordnung), the German Professional Code for Patent Attorneys (Berufsordnung der Patentanwälte), the Statutes of the FICPI (Fédération Internationale des Conseils en Propriété Intellectuelle) and/or the Code of Conduct of the Institute of Professional Representatives before the European Patent Office.

According to another security-related aspect of the present disclosure, the software product is configured to be used without creating prior art and/or jeopardizing the novelty of an invention. In a preferred implementation of the software product, this includes at least full compliance with the German Patents Act (PatG), the European Patent Convention (EPC), and/or the Patent Cooperation Treaty (PCT).According to one security-related aspect of the present disclosure, the AI system, particularly the language model, executes within a secured computing environment. This way, the language model may use and/or incorporate confidential information, e.g., through training, finetuning, or the like, while the risk of unauthorized access to such confidential information is minimized.

The secured computing environment may be a secured cloud computing environment. A cloud computing environment should be understood as a computing infrastructure that allows users to access and utilize computing resources, such as servers, storage, networking, software, and/or applications, over a remote network, in particular the Internet. In a cloud computing environment, these resources are hosted and/or managed by a cloud service provider in their data centers, rather than being hosted locally on individual computers or private data centers.

The secured cloud computing environment may enforce one or more compliance, data security, and/or privacy controls. Using a secured cloud computing environment provides industry-benchmark-level data security. The cloud computing environment may be secured by way of one or more of the following characteristics:
- Physical Security: The cloud service provider may regularly invest in securing the data center physically. The data center may have stringent access controls, video surveillance, biometric authentication, and/or other measures to prevent unauthorized physical access.
- Data Encryption: The cloud service provider may employ strong encryption techniques to protect data in transit, at rest, or both. Data stored in the cloud may be encrypted to prevent unauthorized access even if there is a breach.
- Network Security: The cloud computing environment may be equipped with robust firewalls, intrusion detection systems, and/or other network security measures to safeguard against cyber threats and/or malicious activities.
- Multi-Tenancy Isolation: While cloud resources may be shared among multiple users in a multi-tenant model, the cloud service providers may ensure strict isolation between different tenants, preventing unauthorized access to others' data and/or resources.
- Identity and Access Management (IAM): IAM solutions may be employed to control and/or manage user access to cloud resources. This may include multi-factor authentication, role-based access control, and/or detailed access logs to monitor user activity.
- Regular Security Audits and Compliance: The cloud service provider may undergo regular security audits to assess and/or validate the effectiveness of the security measures. The cloud service provider may also comply with various industry standards and/or regulations to ensure data protection and privacy.
- Data Backups and Disaster Recovery: The cloud computing environment may offer automated data backups and/or disaster recovery mechanisms, ensuring data resilience in case of hardware failures or other emergencies.
- Security Patching and Updates: The cloud service provider may continuously update and/or patch the systems to protect against known vulnerabilities and/or potential threats.
- Security Monitoring and Incident Response: The cloud computing environment may have real-time monitoring and/or alerting systems in place to detect and/or respond to security incidents promptly.
- Expert Security Teams: The cloud service provider may employ dedicated security teams comprising experts who continuously monitor, analyze, and/or respond to security threats.

One exemplary implementation of a secured cloud computing environment is based on Azure OpenAI Service provided by Microsoft. In this exemplary implementation, the AI system, particularly the language model, may execute in the Azure infrastructure subject to Azure's compliance, data security, and/or privacy controls.

The software product, on the other hand, may execute on a user device while the AI system, particularly the language model, executes within the secured cloud computing environment. This way, the software product can execute locally with the user while the AI system can execute securely in the cloud. The communication between the local software product and the cloud-based AI system may be end-to-end encrypted.

According to another security-related aspect of the present disclosure, the software product and the AI system, particularly the language model, both execute within the secured cloud computing environment. This way, a completely cloud-based installation is provided for enhanced security. In this case, the user device may act as a thin client, and the user may use, e.g., a web browser to access the software product 100. The communication between the user device or the web browser and the cloud-based AI system may be end-to-end encrypted.

According to yet another security-related aspect of the present disclosure, the software product and the AI system, particularly the language model, both execute on the user device. Accordingly, in this case the user device is the secured computing environment mentioned further above. This way, a completely local installation is provided which is just as secure as the user device. One or more security measures may be taken to prevent unauthorized access to the user device, including without limitation:
- Strong Passwords/PINs: The user device may require users to set strong passwords and/or PINs for their user accounts. The user device may encourage the use of complex, unique, and/or lengthy passwords that include a mix of upper and lower-case letters, numbers, and/or special characters.
- Multi-Factor Authentication (MFA): The user device may enable MFA to add an extra layer of security. This may require users to provide an additional form of authentication, such as a one-time code sent to their mobile device, in addition to their password.
- Regular Software Updates: This may ensure the operating system, applications, and/or antivirus software on the user device are up to date with the latest security patches.
- Firewall Protection: The user device may execute a firewall to control incoming and/or outgoing network traffic. This helps block unauthorized access attempts and potential malware communication.
- Antivirus and Anti-Malware Software: The user device may execute antivirus and/or anti-malware software to detect and remove malicious software from the device.
- User Account Management: The user device may limit user accounts to only those who require access. The user device may remove or disable unnecessary accounts to minimize the attack surface.
- Least Privilege Principle: The user device may assign users the minimum level of access required for their tasks.
- Encryption: The user device may use encryption to protect sensitive data on the device. Encrypting the hard drive, e.g., ensures that even if the user device is stolen, the data remains unreadable without the encryption key.
- Screen Lock: The user device may comprise an automatic screen lock and/or session timeout to prevent unauthorized access when the device is idle.
- Physical Security: The user device may be physically secured by keeping it in a safe location when not in use and/or using cable locks or other security devices in public areas.
- Remote Wipe/Tracking: The user device may comprise features such as remote wipe and/or device tracking to protect data in case the device is lost or stolen.
- Offline Device: The user device may not, preferably never, be connected to a remote network such as the Internet. The user device may be a device without a network interface.

According to yet another security-related aspect of the present disclosure, the software product, in particular any function module of the software product, is configured to access the AI system only via a secured channel. Depending on where the software product and the AI system execute (see above), the secured channel may be a local connection and/or a network connection.

The secured network connection may comprise one or more of the following characteristics:
- Private Access Service: The secured network connection may enable private communication between virtual networks and/or various services. Users may access specific services hosted within their virtual network, ensuring data privacy and/or security.
- On-Premises Connectivity: With the secured network connection, on-premises networks may securely access services through private peering, VPN tunnels, and/or peered virtual networks, eliminating the need to traverse the public internet and/or enhancing overall security.
- Data Leakage Protection: Private endpoints may be mapped to specific instances of resources, restricting access to designated resources only. This granular control may minimize data leakage risks by preventing unauthorized access to other parts of the service.
- Global Connectivity: The secured network connection may facilitate private connections across regions, allowing secure access to services hosted in different geographic locations.
- Cross-Tenant Connectivity: The secured network connection may support secure connections between different entities belonging to separate contexts, enabling secure communication and/or collaboration between diverse organizational environments.
- The secured network connection may comprise a virtual private network (VPN) connection. A VPN should be understood as a mechanism for creating a secure connection between a computing device and a computer network, or between two networks, using an insecure communication medium such as the public Internet. A VPN may extend a private network (such as one that disallows or restricts public access) in such a way that it enables users of the private network to send and/or receive data across public networks as if the public networks' devices were directly connected to the private network.

According to yet another security-related aspect of the present disclosure, the AI system enforces one or more security measures to prevent unauthorized access. Accordingly, also the AI system itself may be setup as a security-proven component. The one or more security measures may include without limitation:
- Access Control: The AI system may limit access to only authorized personnel and/or systems. Role-based access control (RBAC) may be implemented to ensure that only approved users can interact with the AI system.
- Authentication and Authorization: The AI system may require users to authenticate themselves before accessing the AI system. Strong authentication methods may be used, such as multi-factor authentication (MFA), to add an extra layer of security.
- Encryption: The AI system may encrypt the used data, especially the data used by the language model, both in transit and at rest. This may ensure that even if unauthorized individuals gain access to the data, they cannot decipher it without the encryption keys.
- Secure Communication: The AI system and/or the language model may use and/or require secure communication protocols, such as HTTPS, to transmit data with other systems. This may prevent eavesdropping and man-in-the-middle attacks.
- Audit Trails: The AI system may be subject to logging and auditing mechanisms to track access. The logs may be regularly reviewed to identify any suspicious activities.
- Model Versioning and Control: The AI system may maintain version control for the language model to track changes and ensure that only approved versions are deployed and/or accessed.
- Network Security: The network infrastructure where the AI system is hosted may be protected using firewalls, intrusion detection systems, and/or other security measures to prevent unauthorized access.
- Regular Updates: The AI system may keep the language model and its dependencies up to date with the latest security patches and/or updates to protect against known vulnerabilities.
- Obfuscation: The AI system and/or the language model may use obfuscation techniques to make it more challenging for attackers to reverse-engineer the language model and understand its underlying algorithms.
- Security Testing: The AI system and/or the language model may undergo regular security assessments and/or penetration testing to identify and address potential vulnerabilities.

By employing one or more of the security-related aspects described above and elsewhere in the present disclosure, a highly secured AI system and/or language model can be provided, thereby making it possible to supercharge the process of obtaining IP rights in ways unheard of so far.

The software product may enable the user to securely collaborate with the AI system while drafting the patent application. The software product and/or the AI system may be configured to operate without creating prior art for the patent application. The software product and/or the AI system may be configured to operate such as to cause a patentability status of the patent application which at least corresponds to a patentability status that would have been caused when the patent application was drafted without the software product and/or the AI system. The software product and/or the AI system may be configured to operate such that a confidentiality duty of a patent attorney user is fulfilled.

In the following, a patent application drafting workflow will be described. The described software product comprises one or more function modules. Each function module may be configured to assist a user in one or more tasks for drafting a patent application. It should be noted that the present disclosure is neither limited to the particular patent application drafting workflow, nor to the particular combination of function modules which will be described in the following. Rather, many different software products may be provided based on the present disclosure, comprising any number of the described function modules, and such software products may be used in any suitable patent application drafting workflow or part thereof.

The exemplary patent application process starts from an invention description. The invention description may comprise any information describing an invention, the level of detail ranging from very detailed and/or structured to very short and/or unstructured. The information may be in any format, non-limiting examples including documents (such as invention disclosure forms, text files, word processor documents, portable document format documents, presentation slides, spreadsheets, emails, hand-written notes, or the like), images (such as drawings, scribbles, photographs, screenshots or the like), audio or video.

According to one aspect of the present disclosure, the software product may comprise a so-called "chat module" as a function module which will now be described. This module may be configured to access the AI system, in particular the language model, in a manner as mentioned above, to perform its function.

The chat module may be configured to enable the user to interact with the AI system, particularly the language model, in a conversational manner in natural language. The term "conversational manner" should be understood to refer to the ability of the language model to interact with users in a manner that resembles human conversation. The language model may be capable of understanding natural language inputs and/or generating responses that are contextually relevant, coherent, and/or linguistically appropriate. The language model may engage in back-and-forth dialogues with users, responding to questions, requests, and/or prompts as if it were a human conversational partner. This conversational capability may be achieved through the model's exposure to large amounts of human-written text and/or an underlying machine-learning, in particularly neural network, architecture that allows the language model to learn patterns and/or relationships in language. The language model may be configured to understand nuances of human speech, adapt its responses based on context, and/or maintain a coherent conversation across multiple turns. The language model may simulate a conversational flow by considering the preceding interactions and/or crafting responses that take into account an ongoing dialogue.

Chatting with the language model equips the user with a radically new way to interact with the software product, the user device running the software product, and/or with information processed by the software product. It assists the user in performing the technical tasks of human-computer interaction and/or information retrieval and/or interactively searching and retrieving information by means of a continued and/or guided human-machine interaction process. The assistance to the user in performing these technical tasks is objectively, reliably and causally linked to the conversational manner of the chat. Additional characteristics and resulting technical advantages of the chat-based user interface include:
- Natural Language Input: The chat-based user interface enables users to input queries and interact with the language model using natural language, eliminating the need for complex commands or specialized knowledge. This enhances user accessibility and ease of use.
- Contextual Dialogues: The chat-based user interface may maintain conversational context, enabling users to have continuous and coherent dialogues with the language model. This fosters a more interactive and engaging user experience.
- Simplified User Interaction: The chat-based user interface may simplify user interaction compared to traditional graphical user interfaces (GUIs) or command-line interfaces (CLIs). Users can effortlessly engage in back-and-forth exchanges with the language model, making it a more intuitive and user-friendly experience.
- Real-Time Feedback: The chat-based user interface may provide immediate feedback as the language model processes user input and generates responses in real-time. The term "real-time" should be understood to refer to the immediate and/or near-instantaneous processing and/or communication of data and/or information as it occurs, without any noticeable delay This enhances user satisfaction by reducing response time and latency.
- Multimodal Capabilities: The chat-based user interface may support multimedia elements, such as images, voice, and/or video, enriching the user experience. This broadens the scope of interactions beyond text-based queries.
- Adaptive Layout and Design: The chat-based user interface may employ adaptive design principles to cater to various devices and/or screen sizes. It may dynamically adjust its layout to ensure optimal user experience across different platforms, from desktops to mobile devices.
- Error Handling and User Guidance: The chat-based user interface may include error handling mechanisms and/or user guidance features, helping users correct queries, providing suggestions, and/or clarifying ambiguous inputs. This enhances the software product's robustness and user assistance.
- Integration with Voice Assistants and Chatbots: The chat-based user interface may integrate seamlessly with a voice assistant, enabling voice-based interactions alongside text-based ones. This offers users flexibility in how they engage with the language model.
- Personalization and User Profiles: The chat-based user interface may support user profiles and/or preferences, allowing personalized interactions with the language model. This enhances user engagement and tailors responses to individual needs.

The chat module may be configured to receive a user query in natural language, also referred to as a "prompt", e.g., using text input and/or voice input. Exemplary prompts will be provided throughout the present disclosure. The chat module may be configured to submit the received user query to the AI system, particularly the language model. The chat module may be configured to receive a reply from the AI system, particularly the language model, in natural language. The chat module may be configured to submit the reply to the chat module for presentation to the user.

The chat module may be configured to cause the software product to perform one or more functions in response to a user query and/or prompt, such as by invoking one or more function modules disclosed herein. When the chat-based user interface invokes functions of the software program, it offers several technical advantages that enhance user experience, accessibility, and/or system efficiency. Some of the key technical advantages include:
- Natural Language Interaction: Users can invoke functions using plain, conversational language, eliminating the need to memorize complex command syntax or navigate through menus. This simplifies user interaction and makes the software product more user-friendly and the human-computer interaction more streamlined.
- Intuitive Command Recognition: The chat-based interface can employ advanced natural language processing (NLP) techniques to recognize and interpret user commands accurately. This enables the software product to understand user intent, even with varying phrasing or minor differences in input.
- Dynamic Command Suggestions: The chat-based user interface can provide real-time command suggestions based on the context of the conversation. This helps users discover available functions and streamline the interaction process.
- Context Retention: The chat-based interface can retain conversational context, allowing users to reference previous commands and/or responses. This facilitates more natural and continuous interactions with the software.
- Multi-Function Support: Users can access a wide range of software functions through a single interface, reducing the need for switching between different screens or applications. This offers a unified and cohesive user experience.
- Remote Accessibility: The chat-based user interface can be accessed remotely, enabling users to interact with the software program from various devices and locations. This enhances user flexibility and mobility.
- Error Handling and Validation: The chat-based user interface can employ intelligent error handling and/or validation mechanisms to prevent incorrect or incomplete commands. This enhances the robustness and reliability of the software product.
- Real-Time Feedback and Notifications: The chat-based interface can provide real-time feedback on command execution and respond to queries promptly. This ensures an immediate and interactive user experience.

The chat module may be configured to enable the user to query a specific document and/or piece of information in a conversational manner in natural language. This way, the user is enabled to effectively chat with documents. For example, the user might ask the chat module questions like "Which problem is solved according to the invention description?", or "Does D1 disclose a central server?". The unprecedented advantages of this will become fully apparent by way of the examples given throughout the present disclosure.

Chatting with a document using the language model may involve the user interacting with the language model as if it were a conversational partner, with the document serving as a reference or source of information. An exemplary process may comprise one or more of:
- Input Query: The user may provide a query or question in natural language. For example, the user might ask a question related to the content of the document or request specific information.
- Model Processing: The language model may process the user input and may understand the context and intent of the query based on its training on vast amounts of text data.
- Document Retrieval: The language model may access the content of the document or use a search mechanism to find relevant information related to the user's query.
- Response Generation: The language model may generates a response that provides an answer or information based on the content of the document. The response may be in natural language format and can comprise a summary or a specific excerpt from the document.
- Iterative Interaction: The conversation may continue in a back-and-forth manner, with the user asking follow-up questions or seeking more details, and the language model providing relevant responses based on the document content.

Chatting with a document using a language model equips the user with a radically new way to interact with and extract information from documents. It assists the user in performing the technical task of information retrieval and/or interactively searching and retrieving information by means of a continued and/or guided human-machine interaction process. The assistance to the user in performing these technical tasks is objectively, reliably and causally linked to the conversational manner of the chat.

Additional advantages of this approach include:
- Efficient Information Retrieval: Users may quickly access specific information from the document without having to read through the entire content manually.
- Natural Language Interaction: Chatting with the language model may allow users to communicate in their own words, making the interaction more natural and user-friendly.
- Contextual Understanding: The language model may grasp the context of the user's questions and provide responses that take into account the broader context of the document.
- Quick Reference and Summarization: The users may obtain key information and/or summaries from lengthy documents, saving time and effort in information retrieval.
- Accessibility: Chatting with a document may make information accessible to a broader audience, including those who may not have the time or expertise to navigate complex documents.
- Scalability: The language model may handle multiple users simultaneously, making it scalable for applications with a large user base.
- Language Translation: The language model may be used for real-time language translation, enabling users to interact with documents written in languages they may not be familiar with.
- Virtual Assistant Capabilities: Integrating document chat with the language model may provide virtual assistant-like functionality, answering questions and providing information on demand.

According to one aspect of the present disclosure, the software product comprises a so-called "inventor interview transcription module" as a function module which will now be described. This module may be configured to access the AI system, in particular the language model, in a manner as mentioned above, to perform its function. Such access to the AI system may occur autonomously by the module, in response to user input, in response to an invocation of the module, such as by another function module, or the like.

The inventor interview transcription module may be configured to convert spoken language from interviews, meetings, or other spoken interactions associated with the invention to be patented into written text, also referred to as a transcript. The primary function of the inventor interview transcription module may be to automate the process of transcribing spoken content, making it easier to review, reference, search, and/or share the information exchanged.

The inventor interview transcription module may accept one or more audio recordings as input. These recordings may be obtained from various sources such as live meetings, online meetings, phone calls, or generally through any audio recording device.

The inventor interview transcription module may use a speech recognition algorithm to analyze the audio recording(s) and convert spoken words into written text. This process may involve identifying individual words, sentences, and/or speakers in the audio.

The inventor interview transcription module may process the audio to generate a written transcript. The transcript may capture the spoken content verbatim, including dialogues, discussions, presentations, and/or any other verbal communication.

The inventor interview transcription module may provide speaker identification capabilities to recognize and/or label different speakers based on their unique vocal patterns, making it easier to attribute statements to specific individuals.

The inventor interview transcription module may be formatted for readability, including paragraph breaks and/or punctuation. Additionally, timestamps may be added at regular intervals to indicate when each segment of speech occurred in the recording. This helps users navigate and/or refer to specific parts of the conversation.

The inventor interview transcription module may provide editing tools that allow users to review and/or correct any inaccuracies or misinterpretations in the generated text. This may enhance the accuracy of the final transcript.

The inventor interview transcription module may enable users to search for specific keywords or phrases within the transcribed content. Users can quickly locate relevant information without listening to the entire audio recording.

The inventor interview transcription module may serve as a valuable documentation tool. It may help maintain accurate records of discussions, decisions, and/or action items associated with the invention discussed and/or the patent application to be drafted, which can be referred to in the future for clarification and/or compliance purposes.

The inventor interview transcription module may be configured to convert the generated transcript into a structured invention description, enhancing its utility in the patent drafting workflow. This advanced capability allows the inventor interview transcription module to go far beyond simple text transcriptions and to generate documents that serve as an optimized input or the subsequent patent drafting process. The inventor interview transcription module may save the generated interview transcription module alongside the transcript and/or the audio recording.

To enable the generating of a structured invention description, the AI system may be adapted (such as trained, pre-trained and/or fine-tuned; see further below) to produce structured invention descriptions as output. This may be carried out based on patent-specific training data, such as one or more templates of a structured invention description and/or a set of samples of structured invention description samples and, optionally corresponding transcripts and/or audio recordings.

Overall, the inventor interview transcription module may streamline the process of converting spoken content during the inventor interview into written text, and even structured invention descriptions, making these meetings more accessible, efficient, and productive.

According to one aspect of the present disclosure, the software product comprises a so-called "import module" as a function module which will now be described. This module may be configured to access the AI system, in particular the language model, in a manner as mentioned above, to perform its function. Such access to the AI system may occur autonomously by the module, in response to user input, in response to an invocation of the module, such as by another function module, or the like.

The import module may be configured to receive the invention description and/or supporting information, e.g., one or more prior art documents, and/or to generate an internal representation thereof. The invention description may be received from a client instructing the drafting of a patent application, as an output of the inventor interview transcription module described further above, or any other source. For example, the import module may import one or more files from a file system, such as the file system of a user device where the software product is running, from a remote server or a network location accessible through a URL or network file system protocol (e.g., FTP, HTTP, SSH), from one or more databases, from one or more API endpoints, from another software product such as a docketing software. The user may use the chat module described further above to prompt the AI system, particularly the language model, to import the one or more files.

The import module may be configured to retrieve additional information from one or more sources external to the software product, for example:
The import module may access an online patent information database such as INPADOC or Espacenet to download information about any patent literature referenced in the invention description. The downloaded information may comprise electronic documents such as PDFs and/or structured information, if provided by the online patent information database.

The import module may access an online non-patent literature database such as IEEE Xplore to download information about any non-patent literature referenced in the invention description, such as journal articles, conference proceedings, technical standards, or the like. The downloaded information may comprise electronic documents such as PDFs and/or structured information, if provided by the online database.

The import module may access a data store associated with an inventor and/or applicant of the patent application to download other information referenced in the invention description, such as operating manuals of a mentioned product, or invention descriptions or unpublished patent applications mentioned in the invention description. Such access may be performed via a secured communication connection.

The import module may access an online encyclopedia such as Wikipedia to download information about one or more terms used in the invention description.

The import module may be configured to digitalize non-digital information comprised in the invention description and/or in the retrieved additional information.

The import module may be configured to extract text from non-textual information comprised in the invention description and/or in the retrieved additional information, such as by applying optical character recognition and/or by transcribing a video.

The import module may be configured to translate information into a target language, which may be user-selectable. This may include machine-translation capabilities and/or the capability of obtaining existing translations, e.g., from Espacenet. The import module may be configured to translate all collected information into one language, e.g., the language that is chosen as the language of the patent application.

The import module may be configured to generate a mapping between information originally comprised in the invention description or otherwise received by a user and information retrieved by or generated by the import module. Non-limiting examples include a mapping between a video and a generated transcript or a mapping between text in an original language and text in the target language.

The import module may be configured to store received, retrieved and/or generated information in the internal representation of the invention description. This way, the import module may generate a comprehensive and coherent internal representation of the invention description which may be accessed and used by other function modules described herein.

According to one aspect of the present disclosure, the software product comprises a so-called "invention summary module" as a function module which will now be described. This module may be configured to access the AI system, in particular the language model, in a manner as mentioned above, to perform its function. Such access to the AI system may occur autonomously by the module, in response to user input, in response to an invocation of the module, such as by another function module, or the like.

The invention summary module may be configured to generate, in particular programmatically generate, an invention summary in natural language, in particular based on any information comprised in the invention description and/or based on the internal representation of the invention description. The invention summary may comprise one or more of: a field of the invention, a prior art approach, a disadvantage of the prior art approach, and a solution provided by the invention. The solution provided by the invention may comprise one or more necessary solution features and one or more optional solution features. In one practical implementation, the invention summary follows the format "The invention is in the field of .... The common approach is described as .... However, the problem is that .... The invention solves this by .... As an add-on, the invention may ....".

According to one aspect of the present disclosure, the software product presents the invention summary in a way so that the user can expand or collapse portions thereof. The user may use the chat module described further above to prompt the AI system, particularly the language model, to chat with the invention summary, comprising querying, editing, modifying or otherwise interacting with the invention summary. The user may navigate, preferably in response to a single user action, to one or more corresponding parts of the invention description and/or any additionally retrieved information. The one or more corresponding parts may be highlighted. This may allow for a particularly efficient human-computer interface which requires a reduced number of user interactions, such as mouse clicks and the like, to find the desired information. In one example, the user clicks on a term in the summary and the software product will show relevant information, e.g., a section in an imported IDF, possibly highlighted and/or color-coded. The user can also chat with the summary, e.g., by asking questions like "What exactly is meant by ...?" or "Please look up Wikipedia about...".

Using the invention summary module, a user of the software product such as an in-house patent manager and/or an outside patent drafter may be enabled to quickly understand the invention description and/or to assess if additional information, e.g., from the inventor(s), is needed.

According to one aspect of the present disclosure, the software product may comprise a so-called "invention description scoring module" as a function module which will now be described. This module may be configured to access the AI system, in particular the language model, in a manner as mentioned above, to perform its function. Such access to the AI system may occur autonomously by the module, in response to user input, in response to an invocation of the module, such as by another function module, or the like.

The invention description scoring module may be configured to generate, in particular programmatically generate, an invention description assessment, in particular based on the internal representation of the invention description. The invention description assessment may comprise a text in natural language, and/or a quality score, e.g., from 0 to 100, which may be presented on a scale or with a color code, e.g., from red to green. The invention description assessment may comprise one or more recommendations on how the invention description could be improved, such as by way of example: "The solution features could be more clearly ranked by importance", "The solution features could be described more specifically", "The invention could be more clearly compared with the prior art", or the like.

According to one aspect of the present disclosure, the software product may comprise a so-called "prior art search module" as a function module which will now be described. This module may be configured to access the AI system, in particular the language model, in a manner as mentioned above, to perform its function. Such access to the AI system may occur autonomously by the module, in response to user input, in response to an invocation of the module, such as by another function module, or the like.

The prior art search module may be configured to enable the user to perform a prior art search. The prior art search module may interface with an existing prior art search software product or service, e.g., Espacenet, The Lens and/or predori. The prior art search module may be configured to import one or more prior art documents as a result of the prior art search, using the import module and/or one or more functions similar to those described in connection with the import module.

The user may use the chat module described further above to prompt the AI system, particularly the language model, to chat with the one or more prior art documents.

According to one aspect of the present disclosure, the software product may comprise a so-called "invention conception module" as a function module which will now be described. This module may be configured to access the AI system, in particular the language model, in a manner as mentioned above, to perform its function. Such access to the AI system may occur autonomously by the module, in response to user input, in response to an invocation of the module, such as by another function module, or the like.

The invention conception module may be configured to build a taxonomy comprising one or more invention concepts (also referred to as "invention taxonomy"). A taxonomy should be understood as a scheme of classification, especially hierarchical classification, in which things are organized into groups and/or types. The one or more invention concepts may comprise one or more solution features, each specifying a feature of an invention for which the patent application should be drafted, technical effects, advantages, problems, variants, or the like.

The invention conception module may generate the taxonomy, in particular a first version thereof, programmatically, in particular based on information comprised in the invention description and/or based on the internal representation of the invention description. The invention conception module may receive user input to generate and/or to edit the taxonomy.

The user may use the chat module described further above to prompt the AI system, particularly the language model, to chat with the taxonomy, comprising querying, editing, modifying or otherwise interacting with the taxonomy.

The invention conception module may programmatically identify when two terms are used as synonyms, and may associate the terms accordingly. The invention conception module may enable the user to define additional terms, such as an umbrella term for a common class of terms. The user may use the chat module described further above to prompt the AI system, particularly the language model, for such umbrella terms. For example, the user may ask "What's a good umbrella term for smartphone and tablet?", and the software product will recommend an umbrella term and possibly a suggested position in the taxonomy.

The invention conception module may be configured to enable the user to graphically interact with the taxonomy, e.g., by drag-and-drop.

The invention conception module may be configured to enable the user to select a set of (i.e., one or more) invention concepts. The invention conception module may invoke the prior art search module to check the selected set of invention concepts, in particular the combination thereof, against the prior art. The result may be indicated to the user with a rating, color coding, specific highlighting of passages in the prior art document(s), or the like, and optionally also an explanation in natural language.

The invention conception module may be configured to enable the user to select multiple sets of invention concepts as described above, and to arrange them in a hierarchy, e.g., to indicate a possible sequence of patent claims.

The invention conception module may be configured to enable the user to associate additional information with a set of invention concepts, such as one or more technical effects associated with an invention concept. The user may use the chat module described further above to prompt the AI system, particularly the language model, for such technical effects. For example, the user may ask "Tell me 10 technical effects of feature ...".

According to one aspect of the present disclosure, the software product may comprise a so-called "patent application generator module" as a function module which will now be described. This module may be configured to access the AI system, in particular the language model, in a manner as mentioned above, to perform its function. Such access to the AI system may occur autonomously by the module, in response to user input, in response to an invocation of the module, such as by another function module, or the like.

The patent application generator module may be configured to generate, in particularly programmatically generate, information for the patent application.

The patent application generator module may be configured to generate, in particularly programmatically generate, one or more patent claims or an initial version thereof for the patent application, in particular based at least in part on the taxonomy and/or (the internal representation of) the invention description. The user may use the chat module described further above to prompt the AI system, particularly the language model, to chat with the one or more patent claims, comprising querying, editing, modifying or otherwise interacting with the one or more patent claims. For example, the user may prompt the AI system to change the claim category of a given patent claim, to draft a patent claim in a specific claim category based on another patent claim, to reformulate a certain feature in a patent claim as an optional feature. To split up a patent claim into multiple patent claims, to combine multiple patent claims into one patent claim, or to perform any other meaningful action with respect to the one or more patent claims.

The patent application generator module may be configured to perform one or more quality checks on the one or more patent claims. As an example, the patent application generator module can check if the claims conform to recommended claim formats in patent authority guidelines of various jurisdictions. Another example is a check for detectability of the claimed subject-matter. Yet another example is a check for divided infringement. The patent application generator module may explain the result of any such check to the user in natural language, e.g., via the chat module, and may possibly recommend solutions.

The patent application generator module may be configured to generate, in particularly programmatically generate, one or more patent drawings or an initial version thereof for the patent application, in particular based at least in part on the taxonomy, the one or more patent claims and/or (the internal representation of) the invention description. The one or more patent drawings may comprise one or more block diagrams and/or one or more flowcharts and/or one or more figures based on drawings comprises in the invention description. The patent application generator module may be configured to generate formalized black-and-white drawings. The user may use the chat module described further above to prompt the AI system, particularly the language model, to chat with the one or more patent drawings, comprising querying, editing, modifying or otherwise interacting with the one or more patent drawings. For example, the user may prompt the AI system to re-arrange one or more elements, apply or change reference signs, or to perform any other meaningful action with respect to the one or more patent drawings.

The patent application generator module may be configured to generate, in particularly programmatically generate, a patent description or an initial version thereof for the patent application based at least in part on the taxonomy, the one or more patent claims, the one or more patent drawings and/or (the internal representation of) the invention description. The patent description may comprise a technical field section, a background section, a summary section, a brief figure description section, a detailed description section and/or a reference sign list. The patent description may be generated based at least in part on a predefined template and/or a user-provided template. The user may use the chat module described further above to prompt the AI system, particularly the language model, to chat with the patent description, comprising querying, editing, modifying or otherwise interacting with the patent description. For example, the user may prompt the patent application generator module for for things like: "Make the background section shorter", "Cite document ... in the background section", or "Make the description more in the style of an Apple application".

The patent application generator module may be configured to generate, in particularly programmatically generate, a patent abstract or an initial version thereof for the patent application.

The following is a more technical description of aspects of the language model used in aspects presented in the present disclosure:
The language model may be a probabilistic model of a natural language which is configured to generate probabilities of a series of words based on text corpora in one or multiple languages it was trained on. The language model may comprise, or be, a machine-learning model, in particular a deep learning model, in particular a transformer-based deep learning model. The language model may comprise, or be, a Generative Pre-trained Transformer (GPT) model. The language model may comprise one or more of the following characteristics:
- Transformer Architecture: The transformer architecture may rely on self-attention mechanisms to process sequences of words and model the relationships between different words in the input text.
- Encoder-Decoder Setup: The model may comprise, or be, an autoregressive language model which may use an encoder-decoder setup. The model may use only the encoder portion to generate text based on input contexts.
- Self-Attention Mechanism: The model may comprise a self-attention mechanism which allows the model to weigh the importance of each word in the input sequence concerning all other words, capturing long-range dependencies effectively.
- Multi-Head Attention: The model may employ multi-head attention, where the self-attention is performed multiple times with different learned projections, allowing the model to capture different aspects of the relationships between words.
- Positional Encoding: The model may not have an inherent sense of word order, but positional encodings may be added to the input embeddings to give the model information about the position of each word in the input sequence.
- Feed-Forward Neural Networks: After self-attention, a feed-forward neural network may be used to process the transformed representations, providing the model with the capacity to capture more complex patterns in the data.
- Layer Stacking: The model may comprise, or consist of, multiple layers of transformers (in particularly over 12 to hundreds of layers) stacked on top of each other. Each layer may refine the representation of the input text, leading to a hierarchical understanding of the language.
- Pre-training and Fine-tuning: The model may be pre-trained on massive amounts of text data, e.g., using unsupervised learning. After pre-training, the model may be fine-tuned on specific downstream tasks with smaller (labeled) datasets to adapt them for specific applications.
- Parameter Sharing: The model may benefit from parameter sharing across layers, which reduces the number of parameters and allows it to scale effectively.

As mentioned above, the language model may be trained, pre-trained and/or fine-tuned. For example, the language model may be trained, pre-trained and/or fine-tuned based on patent information such as patents and/or patent applications, e.g., from an online patent information database such as INPADOC or Espacenet. The language model may be trained, pre-trained and/or fine-tuned based on patent prosecution information such as office actions and office action replies, e.g., from an online patent register. The language model may be trained, pre-trained and/or fine-tuned based on legal texts such as the European Patent Convention, the European Patent Office Official Journal, the European Patent Office Guidelines and the like, and/or similar resources from other jurisdictions. The language model may be trained, pre-trained and/or fine-tuned based on case law information such as patent authority decisions.

The language model may be trained, pre-trained and/or fine-tuned based on non-patent literature such as journal articles, conference proceedings, technical standards, or the like, e.g., from an online non-patent literature database such as IEEE Xplore.

The language model may be trained, pre-trained and/or fine-tuned based on encyclopedic knowledge, e.g., from an online encyclopedia such as Wikipedia.

The language model may be trained, pre-trained and/or fine-tuned based on information associated with an inventor and/or applicant of the patent application, such as operating manuals of a mentioned product, or invention descriptions or unpublished patent applications mentioned in the invention description or otherwise provided by the inventor and/or applicant.

The language model may be trained, pre-trained and/or fine-tuned based on information associated with a user of the software product, such as templates, style guides, or the like.

The language model may be trained, pre-trained and/or fine-tuned to a particular technical field. Different language models may be provided for different technical fields.

The language model may be trained, pre-trained and/or fine-tuned to a particular patent and/or patent applicant. Different language models may be provided for different patents and/or patent applicants.

The language model may be trained, pre-trained and/or fine-tuned based on any information disclosed herein, including the invention description.

The language model may comprise one or more of OpenAl's GPT, such as GPT-3 or GPT-4, Google's LaMDA or PaLM, Hugging Face's BLOOM or XLM-RoBERTa, Nvidia's NeMO, XLNet, Co:here, GLM-130B and/or LLaMA.

The language model may comprise one or more models provided by the user.

The process of training the language model may comprise exposing the language model to a massive dataset of text from various sources, such as books, articles, websites, and other textual resources. During training, the language model may utilize one or more machine learning algorithms, such as transformer-based architectures, to learn the statistical patterns and correlations present in the data. These patterns enable the language model to understand the structure and/or context of language, allowing it to generate coherent and/or contextually appropriate responses.

Pre-training may refer to the initial phase in training the language model, where the model is exposed to a vast amount of raw text data to learn general language patterns. During pre-training, the language model may be trained to predict the next word in a sequence of words, given the context of the preceding words. This process helps the language model develop an understanding of grammar, semantics, and/or the relationships between words.

After pre-training, the language model may be fine-tuned on a more specific dataset that is tailored to the application domain or task, here: intellectual property, in particular patents. Fine-tuning may allow the language model to adapt its general language knowledge to perform specialized tasks effectively. The fine-tuning dataset may comprise examples of the specific task, and the language model's parameters may be further adjusted during this phase. Exemplary datasets usable for pre-training have been described above and elsewhere throughout the present disclosure.

Throughout the present disclosure, "artificial intelligence" (AI) should be understood as the simulation of human intelligence in machines that are programmed to perform tasks that typically require human intelligence. Such artificial intelligence may comprise machine learning, deep learning, and natural language processing (NLP) as already mentioned further above. The AI system involved in aspects of the present disclosure should be understood as a technological framework and/or software infrastructure that embodies and/or applies AI methodologies to execute tasks, address challenges, and/or facilitate decision-making processes that conventionally necessitate human-like cognitive abilities. This may encompass a plurality of algorithms, data processing techniques, and/or machine learning models, including the one or more LLMs disclosed herein, designed to ingest, analyze, and/or interpret data in ways that mirror and/or enhance human cognitive functions.

The AI system of aspects of the present disclosure can manifest in various realization variants, spanning both hardware implementations, software implementations, or combinations. Hardware-based realizations may comprise dedicated processing units, neural network accelerators, and/or custom-designed hardware architectures optimized for AI computations. These hardware variants can be employed in edge devices, servers, cloud infrastructures, and/or specialized hardware platforms.

Software-based implementations of the AI system or parts thereof may comprise one or more software components that are orchestrated to replicate intricate cognitive operations. Such a software-based AI system may encompass a diverse spectrum, from rule-based systems, expert systems, and/or classical machine learning algorithms to more advanced deep learning frameworks. This encompasses AI systems that operate purely in software environments without necessitating specialized hardware, making them versatile and accessible to a wide range of users and devices.

Furthermore, a hybrid AI system may be provided, blending hardware accelerators with sophisticated software algorithms to achieve optimal performance and/or efficiency. This hybridization may enable the AI system to tackle computationally intensive tasks efficiently and attain exceptional processing speeds.

In essence, the AI system of aspects of the present disclosure comprises a comprehensive and/or adaptable architecture that harnesses AI principles to achieve or at least support the functionalities described herein. This way, the AI system may serve as a central backbone for a multitude of the distinctive functionalities described within this disclosure.

Notably, the AI system's implementation is flexible, catering to various deployment scenarios. It can be realized as a singular, centralized component, such as a software module, e.g., as one of the function modules. Alternatively, it can be realized as an interconnected collection of distributed components or function modules, each contributing to specific tasks, yet collectively driving the overarching capabilities outlined in this disclosure.

Throughout the present disclosure, a "software product" should be understood as a computer program, computer program product, application, software-based item or software-based service which can be created, distributed and/or provided for use by one or more users. The software product may come in various forms, including without limitation:
- A standalone software product which can be installed and run on a data processing apparatus, computer or other electronic device to perform specific tasks or provide particular functionalities.
- A web-based or cloud-based software product which can be accessed through web browsers or other internet-enabled applications to provide services or functionalities over a network such as the Internet.
- A mobile software product which may be designed specifically for use on mobile devices such as smartphones or tablets.
- A software product as a Service (SaaS) which can be delivered and/or accessed over the Internet, typically on a subscription or pay-per-use basis.
- A platform software product which provides a platform for other software applications to run.
- A plugin software product or extension software product which enhances the capabilities of an existing software application such as a word processing software like Microsoft Word.

The software product may comprise commercial and/or non-commercial software and/or code. The software product may comprise proprietary, open-source and/or freeware software and/or code.

Throughout the present disclosure, a "user" may be any person or group of (natural) persons, in particular any person or group of persons involved in electronic document processing, such as in the drafting of a patent application. User may also be referred to as authors in the present disclosure. Specific examples of users in the IP field, which is one of a variety of exemplary application domains of aspects of the present disclosure, include without limitation, inventors, patent attorneys, patent agents, technical experts, patent drafting teams, patent officers, patent examiners, patent office officials, patent review committees, translators, paralegals, or the like.

One aspect of the present disclosure provides a method of operating any one of the software products described in the present disclosure.

One aspect of the present disclosure provides a data processing apparatus having stored thereon and/or being configured to execute any one of the software products described in the present disclosure. The data processing apparatus may comprise means for carrying out any of the methods described in the present disclosure. The data processing apparatus may be any device or system configured to process data through electronic, computational, and/or information manipulation means. The data processing apparatus may comprise various hardware components such as one or more processors, one or more memory devices, one or more storage devices, one or more input/output interfaces, and/or other electronic circuits.

The data processing apparatus may take the form of a computer (e.g., general-purpose computer, laptop, server, workstation, mainframe computer), a mobile device (e.g., smartphone, tablet, other handheld device), an embedded system (e.g., customized computer system integrated into various products, such as consumer electronics), a data center (e.g., facility housing multiple interconnected data processing apparatus), a cloud computing system (e.g., virtualized environment, distributed computing system), and/or an Artificial Intelligence (AI) hardware system (e.g., a device equipped with specialized processors and/or algorithms to perform complex data analysis, machine learning, and/or decision-making tasks).

One aspect of the present disclosure provides a computer program or a computer-readable medium having stored thereon the computer program, the computer program comprising instructions which, when the computer program is executed by a data processing apparatus, cause the data processing apparatus to operate any one of the software products described in the present disclosure and/or to carry out any of the methods described in the present disclosure.

One aspect of the present disclosure provides a language model configured for use in any one of the software products and/or methods described in the present disclosure.

### BRIEF DESCRIPTION OF THE DRAWINGS

The disclosure may be better understood by reference to the following drawings:
- Fig. 1:: A schematic block diagram of a software product communicating with an AI system over a secured channel in accordance with embodiments of the present disclosure.
- Fig. 2a:: A schematic block diagram of a cloud-based installation of the software product in accordance with embodiments of the present disclosure.
- Fig. 2b:: A schematic block diagram of an alternative cloud-based installation of the software product in accordance with embodiments of the present disclosure.
- Fig. 2c:: A schematic block diagram of a local installation of the software product in accordance with embodiments of the present disclosure.
- Fig. 3:: A schematic block diagram with details of the software product in accordance with embodiments of the present disclosure.
- Fig. 4:: A flowchart of a method of AI-assisted natural-language text processing in accordance with embodiments of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

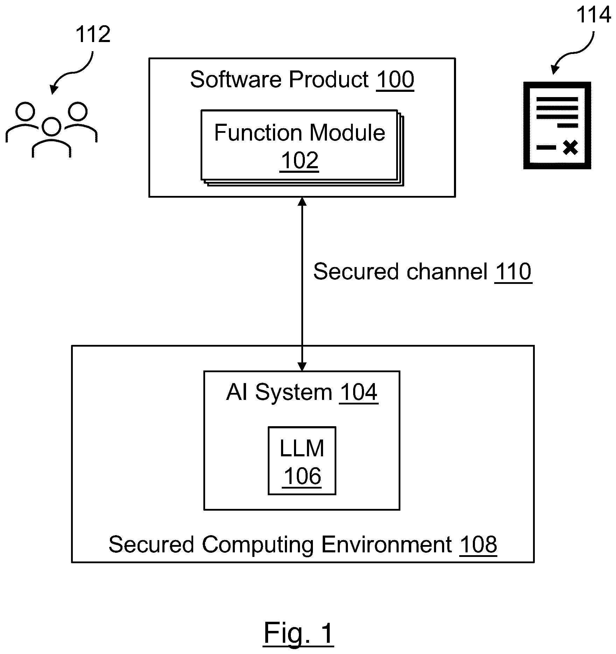

Fig. 1 illustrates a schematic block diagram of a software product 100 in accordance with an exemplary embodiment. As can be seen, the software product 100 comprises function modules 102. The software product 100 communicates with an AI system 104 via a secured channel 110. The AI system 104 comprises an LLM 106, which is one form of a language model. The AI system 104 executes within a secured computing environment 108. This way, the software product can be advantageously used by a user 112 to draft a patent application 114, as has been explained in great detail elsewhere in the present disclosure.

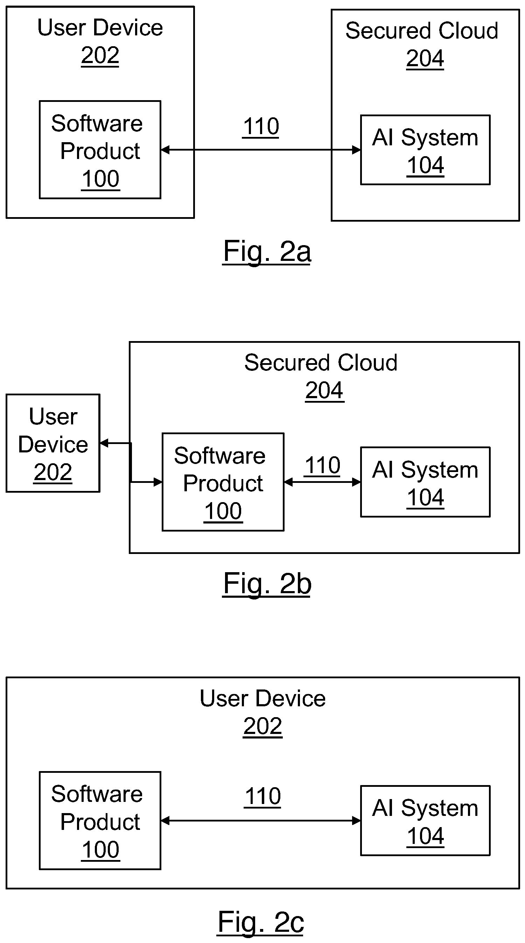

Figs. 2a-c illustrate possible installation variants of the software product 100 and AI system 106.

In the installation shown in Fig. 2a, the AI system 104 executes within a secured cloud computing environment 204, which is therefore one form of the secured computing environment 108 of Fig. 1. The software product 100 executes on a user device 202.

In the installation shown in Fig. 2b, both the AI system 104 and the software product 100 execute within the secured cloud computing environment 204.

In the installation shown in Fig. 2c, both the AI system 104 and the software product 100 execute on the user device 202 which is therefore one form of the secured computing environment 108 of Fig. 1.

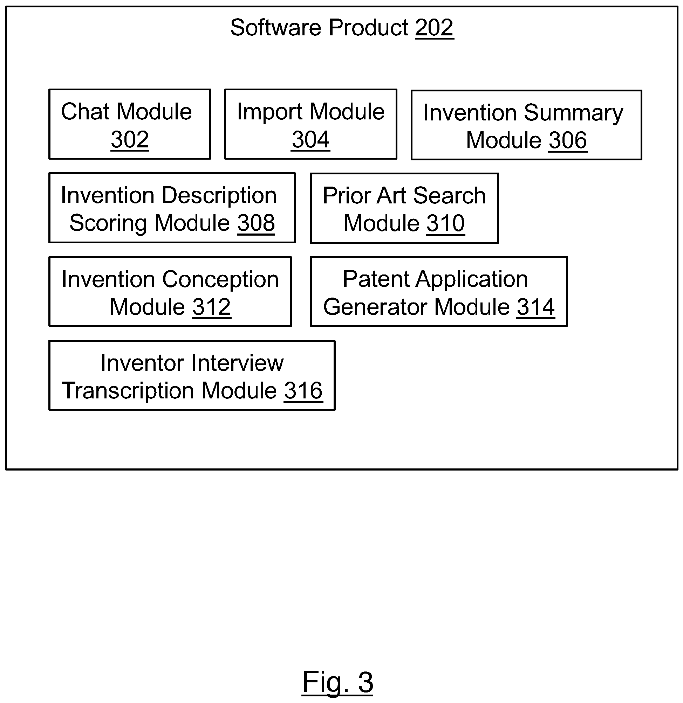

One advantageous application of the techniques presented in the present disclosure relates to electronic document processing in the field of intellectual property rights, and more specifically to techniques for exploiting the capabilities of artificial intelligence and natural language processing while meeting the exceptionally high security standards in the field of intellectual property rights. Certain embodiments provide a software product in the form of an integrated development environment for patent application documents and other work products that greatly streamlines the patenting workflow. Fig. 3 illustrates a schematic block diagram with more details of the software product in accordance with embodiments of the present disclosure. In the illustrated configuration, the software product 202 comprises a chat module 302, an import module 304, an invention summary module 306, an invention description scoring module 308, a prior art search module 310, an invention conception module 312, a patent application generator module 314, and an inventor interview transcription module 316. The unique functionalities of these function modules 102 have been described elsewhere in the present disclosure. The particular combination of function modules 102 depicted in Fig. 3 is only exemplary. Different combinations may be provided in other embodiments.

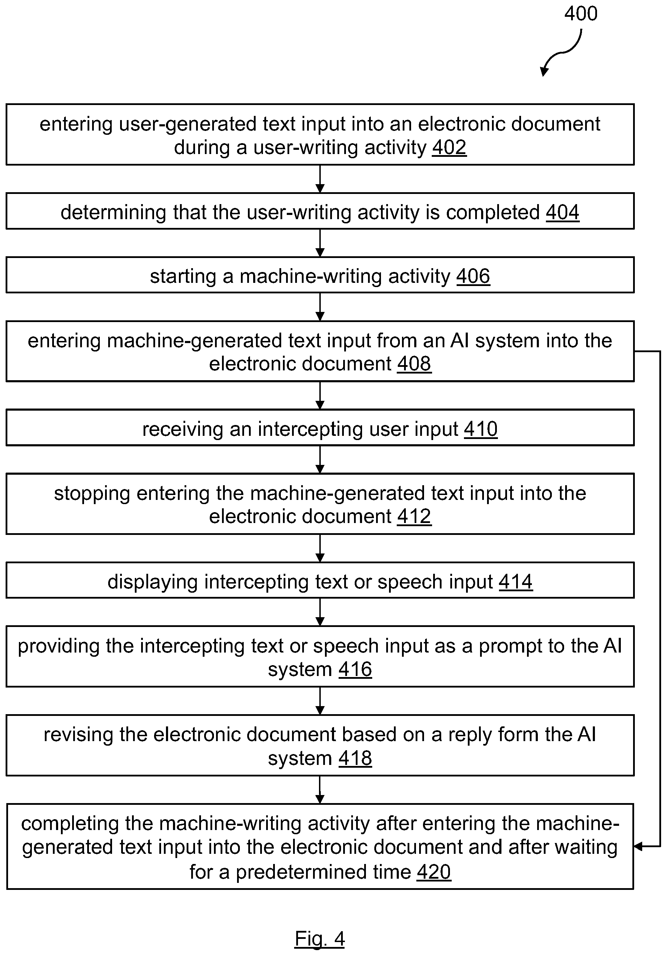

Fig. 4 illustrates a method 400 in accordance with embodiments of the present disclosure. The method serves for AI-assisted natural-language text processing. User-generated text input is entered into an electronic document 114 (see Fig. 1) during a user-writing activity in step 402. It is determined that the user-writing activity is completed in step 404. A machine-writing activity is started in step 406. Machine-generated text input from an AI system 104 is entered into the electronic document 114 in step 408. The machine-writing activity is completed after entering the machine-generated text input into the electronic document 114 and after waiting for a predetermined time in step 420.

During the machine-writing activity, an intercepting user input may be received in step 410. In this case, the method 400 proceeds to stopping the entering of the machine-generated text input into the electronic document 114 in step 412. Intercepting text or speech input is displayed in step 414. The intercepting text or speech input is provided as a prompt to the AI system 104 in step 416. The electronic document 114 is revised based on a reply form the AI system 104 in step 418.

As used herein, the term "and/or" are intended to include any and all combinations of one or more of the associated listed items and may be abbreviated as "/". The singular forms "a", "an", and "the" are intended to also encompass one or more instances. Unless explicitly stated otherwise, any use of these terms in singular shall be interpreted as including their plural forms and vice versa.
1. Certain aspects of the present disclosure have been described in the context of a patent application 114, but this is only one of a wide variety of examples of an electronic document 114. As a matter of fact, the IP field is only one of a variety of application domains. Rather the various aspects, concepts, techniques and/or embodiments described in the present disclosure are generally applicable to any type of electronic document 114, for whatever application or use case. Such exemplary use cases and corresponding examples of electronic documents 114 include without limitation: Legal Documentation: Law firms and legal departments utilize electronic document processing for drafting contracts, agreements, legal briefs, and court filings, streamlining document management and ensuring accuracy.
2. Business Communications: Businesses use electronic document processing for generating business proposals, reports, presentations, and internal memos, enhancing efficiency and consistency in communication.
3. Academic and Research Writing: Researchers and academics benefit from electronic document processing to write research papers, theses, dissertations, and scholarly articles, supporting collaboration and adherence to formatting standards.
4. Medical Records: Healthcare institutions use electronic document processing for maintaining electronic health records (EHRs) and generating medical reports, enabling accurate record-keeping and efficient information retrieval.
5. Financial Reports: Financial institutions employ electronic document processing to create financial statements, audits, tax filings, and investment reports, ensuring precision in financial reporting.
6. Internal Audits: Organizations conduct internal audits using electronic document processing to create audit reports, findings summaries, compliance assessments, and corrective action plans. This ensures accurate record-keeping and efficient communication of audit results for continuous improvement and regulatory adherence.
7. Government and Administrative Documents: Government agencies use electronic document processing for generating official documents, licenses, permits, and administrative forms, enhancing accuracy and reducing paperwork.
8. Education Materials: Educational institutions use electronic document processing to create educational materials, lesson plans, worksheets, and assessments, supporting effective teaching and learning.
9. Content Publishing: Publishers and content creators utilize electronic document processing to format books, magazines, newsletters, and online articles, facilitating efficient publishing across various media.
10. Technical Documentation: Engineering and technical fields rely on electronic document processing for creating user manuals, technical specifications, and documentation for software and hardware products.
11. Creative Writing and Journalism: Writers and journalists leverage electronic document processing for drafting novels, stories, articles, and news reports, enhancing creativity and editorial workflows.
12. Human Resources: HR departments use electronic document processing for generating employment contracts, onboarding materials, and company policies, ensuring consistency and compliance.
13. Real Estate Transactions: Real estate professionals utilize electronic document processing for preparing property contracts, lease agreements, and transaction documentation, streamlining property transactions.
14. Marketing Collateral: Marketing teams use electronic document processing for creating brochures, flyers, presentations, and promotional materials, facilitating brand communication.
15. Scientific Research Papers: Scientists and researchers use electronic document processing for publishing scientific papers, research findings, and experimental methodologies in journals and conferences.
16. Regulatory Compliance Documents: Industries subject to regulations, such as pharmaceuticals and food, use electronic document processing to create compliance reports, safety data sheets, and regulatory submissions.
17. Nonprofit and NGO Reports: Nonprofits and non-governmental organizations utilize electronic document processing to generate impact reports, grant proposals, fundraising appeals, and community outreach materials.
18. Travel and Hospitality: The travel industry employs electronic document processing for creating itineraries, travel guides, hotel reservations, and travel insurance documents.
19. Manufacturing Specifications: Manufacturing industries use electronic document processing to draft product specifications, assembly instructions, quality control reports, and process documentation.
20. Environmental Impact Assessments: Environmental agencies use electronic document processing to compile environmental impact assessments, sustainability reports, and environmental compliance documents.
21. Humanitarian Aid Documents: Organizations involved in humanitarian efforts use electronic document processing for generating relief aid distribution lists, refugee support documents, and needs assessment reports.
22. Historical Archives: Archivists and historians use electronic document processing to digitize and preserve historical records, manuscripts, diaries, and cultural artifacts.
23. Entertainment Scripts: Entertainment industries use electronic document processing to create movie scripts, TV show screenplays, theater plays, and video game narratives.
24. Inventory Management: Businesses employ electronic document processing for creating inventory lists, stock reports, purchase orders, and supply chain documentation.
25. Engineering Blueprints: Engineers and architects use electronic document processing to design and share architectural plans, schematics, and engineering drawings.
26. Insurance Documents: Insurance companies use electronic document processing to generate policy documents, claim forms, insurance contracts, and accident reports.
27. Personal Journals and Blogs: Individuals use electronic document processing for personal writing, such as journals, diaries, blogs, and online articles.
28. Educational Resources: Educational platforms utilize electronic document processing for creating e-learning materials, educational handouts, study guides, and online course content.
29. Museum Catalogs: Museums use electronic document processing to create digital catalogs, exhibition guides, and art collection documentation.
30. Event Planning: Event organizers use electronic document processing for generating event schedules, invitations, guest lists, and logistical plans.
31. Public Relations Materials: PR professionals employ electronic document processing for press releases, media kits, crisis communication plans, and corporate communications.

Although some aspects have been described in the context of a software product and/or an apparatus, it is clear that these aspects also represent a description of the corresponding method, where a block, function model or device corresponds to a method step or a feature of a method step. Analogously, aspects described in the context of a method step also represent a description of a corresponding block or item or feature of a corresponding apparatus or a corresponding function module of a corresponding software product.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

In the following, further examples are disclosed as follows:
1. A software product (100), comprising:
   one or more function modules (102), each configured to assist a user (112) in one or more tasks for drafting a patent application (114);
   wherein at least one of the function modules (102) is configured to access an artificial intelligence, AI, system (104) comprising one or more language models (106);
   wherein the AI system (104) executes within a secured computing environment (108).
2. The software product (100) of example 1, wherein the secured computing environment (108) is a secured cloud computing environment (204), in particular based on Azure OpenAI Service; or
   wherein the secured computing environment (108) is a user device (202) on which the software product (100) and the AI system (104) execute.
3. The software product (100) of any one of the preceding examples, wherein the software product (100), in particular any function module (102) of the software product (100), is configured to access the AI system (104) only via a secured channel (110).
4. The software product (100) of any one of the preceding examples, wherein the AI system (104) enforces one or more measures to prevent unauthorized access.
5. The software product (100) of any one of the preceding examples, wherein the one or more function modules (102) comprise a chat module (302) configured to:
   enable the user to interact with the AI system (104), particularly the one or more language models (106), in a conversational manner in natural language;
   cause the software product (100) to perform one or more functions in response to a user query;
   enable the user (112) to query a specific document and/or piece of information in a conversational manner in natural language.
6. The software product (100) of any one of the preceding examples, wherein the one or more function modules (102) comprise an import module (304) configured to:
   receive an invention description;
   retrieve additional information referenced in the invention description from one or more sources external to the software product, the one or more sources comprising:
      an online patent information database;
      an online non-patent literature database;
      a data store associated with an inventor and/or applicant of the patent application; and/or
      an online encyclopedia to download information about one or more terms used in the invention description;
   digitalize any non-digital information comprised in the invention description and/or in the retrieved additional information;
   extract text from non-textual information comprised in the invention description and/or in the retrieved additional information, such as by applying optical character recognition and/or by transcribing a video;
   translate information into a target language;
   generate a mapping between information originally comprised in the invention description and information retrieved by or generated by the import module; and
   store received, retrieved and/or generated information in an internal representation of the invention description.
7. The software product (100) of any one of the preceding examples, wherein the one or more function modules (102) comprise an invention summary module (306) configured to:
   programmatically generate an invention summary in natural language, wherein the invention summary comprises one or more of: a field of the invention, a prior art approach, a disadvantage of the prior art approach, and a solution provided by the invention;
   present the invention summary in a way so that the user can navigate to one or more corresponding parts of the invention description and/or any additionally retrieved information.
8. The software product (100) of any one of the preceding examples, wherein the one or more function modules (102) comprise an invention description scoring module (308) configured to:
   programmatically generate an invention description assessment, wherein the invention description assessment comprises a quality score and/or one or more recommendations on how an invention description associated with the patent application could be improved.
9. The software product (100) of any one of the preceding examples, wherein the one or more function modules (102) comprise an invention conception module (312) configured to:
   programmatically generate a taxonomy comprising one or more invention concepts.
10. The software product (100) of any one of the preceding examples, wherein the one or more function modules (102) comprise a patent application generator module (314) configured to:
   programmatically generate information for the patent application;
   programmatically generate one or more patent claims or an initial version thereof for the patent application;
   programmatically generate one or more patent drawings or an initial version thereof for the patent application;
   programmatically generate a patent description or an initial version thereof for the patent application;
   programmatically generate, a patent abstract or an initial version thereof for the patent application.
11. The software product (100) of any one of the preceding examples, wherein the one or more language models (106) are trained, pre-trained and/or fine-tuned based on one or more of:
   patent information, such as patents and/or patent applications;
   patent prosecution information, such as office actions and/or office action replies;
   legal texts, such as the European Patent Convention, the European Patent Office Official Journal and/or the European Patent Office Guidelines;
   case law information, such as patent authority decisions;
   non-patent literature, such as journal articles, conference proceedings and/or technical standards;
   information associated with an inventor and/or applicant of the patent application;
   information associated with a user of the software product, such as templates and/or style guides;
   encyclopedic knowledge.
12. A method of operating the software product according to one of examples 1-11.
13. A data processing apparatus having stored thereon the software product according to one of examples 1-11.
14. A computer program or a computer-readable medium having stored thereon the computer program, the computer program comprising instructions which, when the computer program is executed by a data processing apparatus, cause the data processing apparatus to operate the software product according to one of examples 1-11.
15. A language model configured for use in the software product according to one of examples 1-11.

## Claims

1. A method of artificial intelligence, AI, assisted natural-language text processing, comprising:
entering (402) user-generated text input into an electronic document (114) during a user-writing activity while the electronic document is displayed on a graphical user interface, the user-generated text input comprising natural-language text and at least one placeholder;
determining (404) that the user-writing activity is completed; and
starting (406) a machine-writing activity comprising entering (408) machine-generated text input from an AI system (104) comprising one or more language models (106) into the electronic document (114) replacing the at least one placeholder in the electronic document with natural-language text.

2. The method of claim 1, wherein at least one placeholder is determined by a position of a user-controlled text cursor in the electronic document (114) when it is determined that the user-writing activity is completed.

3. The method of claim 1 or 2, wherein at least one placeholder is a placeholder entered by the user (112) into the electronic document (114).

4. The method of claim 3, wherein the at least one placeholder entered by the user (112) comprises one of:
a placeholder character, such as "#" or"/";
a placeholder character sequence, such as "...";
a placeholder pair comprising a leading placeholder character or character sequence, such as "(", "#", "..." or "/", and a trailing placeholder character or character sequence, such as ")", "#", "..." or "/".

5. The method of any one of the preceding claims, wherein the at least one placeholder comprises a prompting input by the user (112), wherein the machine-generated text input is generated by the AI system (104) based at least on the prompting input.

6. The method of claim 4 and 5, wherein the at least one placeholder comprises a leading placeholder character or placeholder character sequence followed by the prompting input and, optionally, followed by a trailing placeholder character or placeholder character sequence.

7. The method of any one of the preceding claims, wherein determining (404) that the user-writing activity is completed comprises one or more of:
determining that the user (112) has provided a function key user input;
determining that the user (112) has stopped the text input for a predetermined threshold time;
determining that the user (112) has stopped the text input for a predetermined threshold time after entering a placeholder;
determining that the user (112) has stopped the text input for a predetermined threshold time after ending a current sentence, in particular by providing a punctuation mark input, in particular a sentence-ending punctuation mark, such as a period, a question mark or an exclamation point, or a comma, a colon or a semicolon.
determining that the user (112) has stopped the text input for a predetermined threshold time after ending a current paragraph, in particular by providing a return key input;
determining that the user (112) has stopped touching a text input device.

8. The method of any one of the preceding claims, wherein the machine-generated text input is visually distinguished from the user-generated text input, such as in a different colour, at least during the machine-writing activity.

9. The method of any one of the preceding claims, wherein an inactive state of a user-controlled text cursor is visually indicated during the machine-writing activity, comprising one of:
changing a visual appearance of the user-controlled cursor, in particular a colour;
removing the user-controlled text cursor from the graphical user interface.

10. The method of any one of the preceding claims, further comprising:
completing (420) the machine-writing activity after entering the machine-generated text input into the electronic document and after waiting for a predetermined time.

11. The method of any one of the preceding claims, further comprising:
receiving (410) an intercepting user input during the machine-writing activity; and
stopping entering (412) the machine-generated text input into the electronic document (114) in response to the intercepting user input.

12. The method of claim 11, wherein the intercepting user input comprises intercepting text or speech input, and wherein the method further comprises:
displaying (414) the intercepting text or speech input on the graphical user interface without editing the electronic document (114);
providing (416) the intercepting text or speech input as a prompt to the AI system (104) to generate a reply; and
revising (418) the electronic document based on the reply.

13. The method of any one of the preceding claims, wherein the machine-generated text input is generated by the AI system (104) based at least on one or more of:
content of the electronic document (114); and
context information available to the AI system (104).

14. A computer program or a computer-readable medium having stored thereon a computer program, the computer program comprising instructions which, when the computer program is executed by a data processing apparatus, cause the data processing apparatus to carry out the method of any one of claims 1-13.

15. A data processing apparatus comprising means for carrying out the method of any one of claims 1-13.
